# EUROPEAN PATENT APPLICATION

(11) **EP 4 814 833 A1**
(43) Date of publication of application: **30.09.2026**
(21) Application number: 23959411.2
(22) Date of filing: 21.11.2023
(51) Int. Cl.: G06Q 10/083

(54) **VEHICLE SYSTEM**

(71) Applicant: Yamaha Hatsudoki Kabushiki Kaisha, Iwata-shi, Shizuoka 438-8501 (JP)
(72) Inventor: YONEDA, Yuichi, Iwata-shi, Shizuoka 438-8501 (JP); FUKUDA, Shimpei, Iwata-shi, Shizuoka 438-8501 (JP); WADA, Tomoki, Iwata-shi, Shizuoka 438-8501 (JP); YAMAMOTO, Kazuki, Iwata-shi, Shizuoka 438-8501 (JP); KINUGASA, Takeshi, Iwata-shi, Shizuoka 438-8501 (JP); KATAYAMA, Koichiro, Iwata-shi, Shizuoka 438-8501 (JP); NAKAI, Kazuhiko, Iwata-shi, Shizuoka 438-8501 (JP); MORITA, Hiroyuki, Iwata-shi, Shizuoka 438-8501 (JP); MASUI, Junya, Iwata-shi, Shizuoka 438-8501 (JP)
(74) Representative: Grünecker Patent- und Rechtsanwälte PartG mbB
(86) International application number: PCT/JP2023/041716
(87) International publication number: WO 2025/109666

(57) **Abstract**

Provided is a vehicle system capable of solving more social issues. A vehicle system includes at least one vehicle 12 that is used for a cargo and passenger transport service; an incentive determining portion 14 that is configured to determine an incentive related to the cargo and passenger transport service; an upstream data transmitting portion 16 that is configured to transmit upstream data that includes incentive information indicating the incentive, the upstream data being data that is used for requesting execution of the cargo and passenger transport service; a downstream data receiving portion 18 that is configured to receive downstream data from applicants who have applied for the execution of the cargo and passenger transport service based on the upstream data; and an executor determining portion 20 that is configured to determine an executor from the applicants based on a predetermined executor selection condition.

## Description

### Technical Field

The present invention relates to, for example, a vehicle system capable of securing a vehicle for cargo and passenger transport.

### Background Art

In recent years, a shortage of manpower for the transport of passengers and cargo (cargo and passenger transport) has been predicted, and addressing the shortage of manpower has become one of social issues.

Further, a "green slow mobility" using an electric cart or the like has been promoted recently. The "green slow mobility" is capable of simultaneously promoting the resolution of local transportation issues such as securing intra-regional transportation in areas with an aging population, and the widespread adoption of low-carbon mobility in such regions.

Patent Literature 1 described below discloses that a passenger of a cargo-passenger mixed vehicle is requested to deliver an item from a stopping location where the item is unloaded to a delivery destination. In Patent Literature 1, a passenger of a cargo-passenger mixed vehicle is utilized to improve delivery efficiency for an item.

### Prior Art Documents

### Patent Literature

Patent Literature 1: JP 2022-024446A

### Summary of Invention

### Problem to be Solved

In the invention disclosed in Patent Literature 1, delivery is requested only to a passenger, and target persons for the request are limited. In addition, the invention disclosed in Patent Literature 1 is not intended to promote the widespread adoption of low-carbon mobility.

The present invention has been made in view of the above circumstances, and an object of the present invention is to provide a vehicle system capable of solving more social issues. Solution to Problem

A vehicle system includes at least one vehicle that is used for a cargo and passenger transport service; an incentive determining portion that is configured to determine an incentive related to the cargo and passenger transport service; an upstream data transmitting portion that is configured to transmit upstream data that includes incentive information indicating the incentive, the upstream data being data that is used for requesting execution of the cargo and passenger transport service; a downstream data receiving portion that is configured to receive downstream data from applicants who have applied for the execution of the cargo and passenger transport service based on the upstream data; and an executor determining portion that is configured to determine an executor from the applicants based on a predetermined executor selection condition.

### Effects of Invention

According to the present invention, it is possible to provide a vehicle system capable of solving more social issues.

### Brief Description of Drawings

[FIG. 1] FIG. 1 is a block diagram illustrating a basic configuration of a vehicle system according to one embodiment.
[FIG. 2] FIG. 2 is a flowchart illustrating a basic process in the vehicle system according to one embodiment.
[FIG. 3] FIG. 3 is a block diagram illustrating a basic hardware configuration of the vehicle system according to one embodiment.
[FIG. 4] FIG. 4 is an explanatory diagram illustrating an example of a delivery route.
[FIG. 5] FIG. 5 is an explanatory diagram schematically illustrating a configuration of upstream data for a target person.
[FIG. 6] FIG. 6 is a flowchart schematically illustrating transmission range determination process.
[FIG. 7] FIG. 7 is a flowchart schematically illustrating incentive change process.
[FIG. 8] FIG. 8 is an explanatory diagram schematically illustrating a configuration of downstream data.
[FIG. 9] FIG. 9 is an explanatory diagram illustrating a modified example of the delivery route.
[FIG. 10] FIG. 10 is a flowchart schematically illustrating a process for a plurality of top-ranked applicants.
[FIG. 11] FIG. 11 is an explanatory diagram schematically illustrating a configuration of upstream data for an executor.

### Description of Embodiments

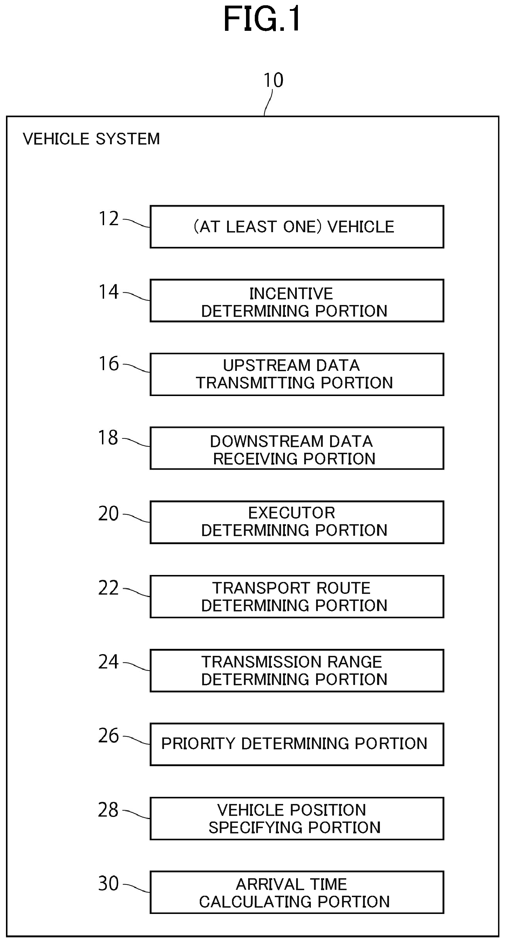

<Outline of Vehicle System 10> Hereinafter, specific embodiments will be described with reference to the drawings. FIG. 1 illustrates a basic configuration of a vehicle system 10 according to one embodiment. The vehicle system 10 includes a vehicle 12, an incentive determining portion 14, an upstream data transmitting portion 16, a downstream data receiving portion 18, and an executor determining portion 20. The vehicle system 10 further includes a transport route determining portion 22, a transmission range determining portion 24, a priority determining portion 26, a vehicle position specifying portion 28, and an arrival time calculating portion 30.

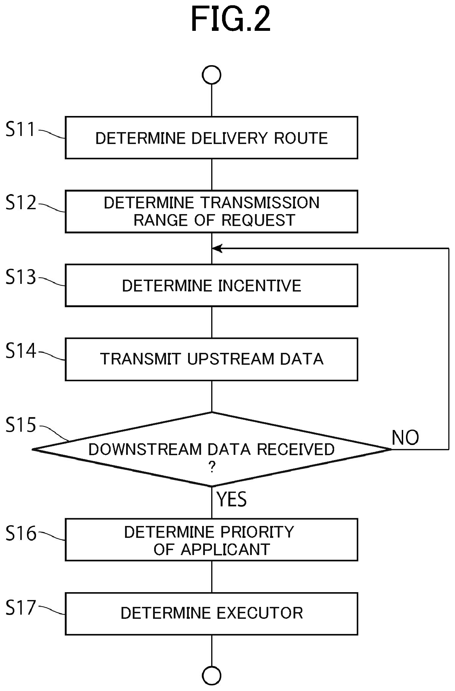

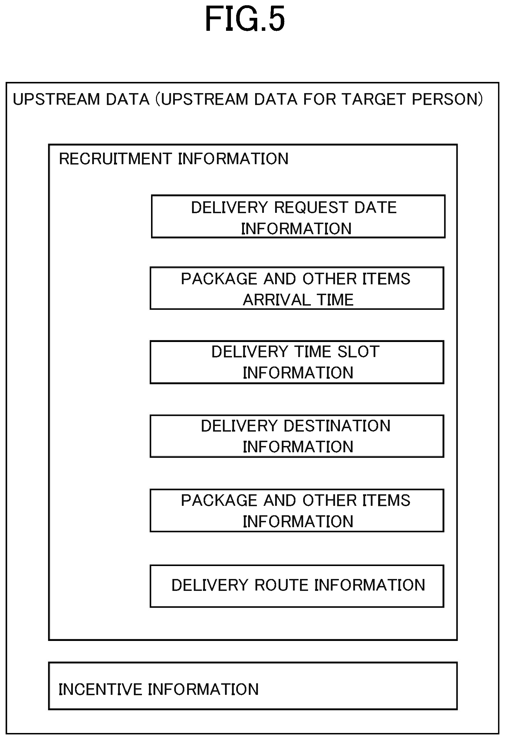

FIG. 2 illustrates a basic process flow in the vehicle system 10 of FIG. 1. In the vehicle system 10, a transport route (a delivery route in FIG. 1) of the vehicle 12 is determined (S11), which is described in detail below. Further, the incentive determining portion 14 determines an incentive related to a cargo and passenger transport service (S13), and the upstream data transmitting portion 16 transmits upstream data (S14). The upstream data includes incentive information indicating the incentive (FIG. 5) and is data requesting execution of the cargo and passenger transport service.

When the downstream data receiving portion 18 receives downstream data (S15: YES), the executor determining portion 20 determines an executor from applicants based on a predetermined executor selection condition (S16 and S17). The downstream data is data transmitted from an applicant who has applied for execution of the cargo and passenger transport service. In a case where there is no applicant and no downstream data is received (S15: NO), the incentive determining portion 14 changes the incentive and determines the incentive again (S13).

Among the elements illustrated in FIG. 1, the vehicle 12 may be used for a service (cargo and passenger transport service) of transporting cargo and passengers (cargo and passenger transport). The term "cargo and passenger" includes both cargo and passengers. In addition, the "cargo" is not particularly limited, and includes, for example, baggage, a large package that cannot be carried by a person, and other items.

The cargo and passenger transport service includes various transport services such as a home delivery service for delivering a requested package, a cargo transport service using a truck vehicle, a taxi transport service for transporting a passenger to a requested destination, and a nursing care transport service for elderly people. In addition, the cargo and passenger transport service also includes a cargo-passenger mixed transport service that transports both cargo and passengers in a mixed manner.

Note that types of vehicles that can be used as the vehicle 12 are described below. Further, in the present embodiment, the number of vehicles 12 may be one or may be more than one. That is, the vehicle system 10 may utilize one vehicle 12 or may utilize a plurality of vehicles 12. Further, a plurality of vehicles may be driven simultaneously or may be driven sequentially to relay cargo and passengers (in a relay manner).

Hereinafter, a case where only one vehicle 12 is driven and a case where a plurality of vehicles 12 are driven in a relay manner will be described to simplify the description. In the case of driving the plurality of vehicles 12 in a relay manner, a vehicle used in a preceding stage of the relay may be referred to as a "transferring vehicle 12A", and a vehicle used in a subsequent stage may be referred to as a "receiving vehicle 12B", depending on the situation of the description.

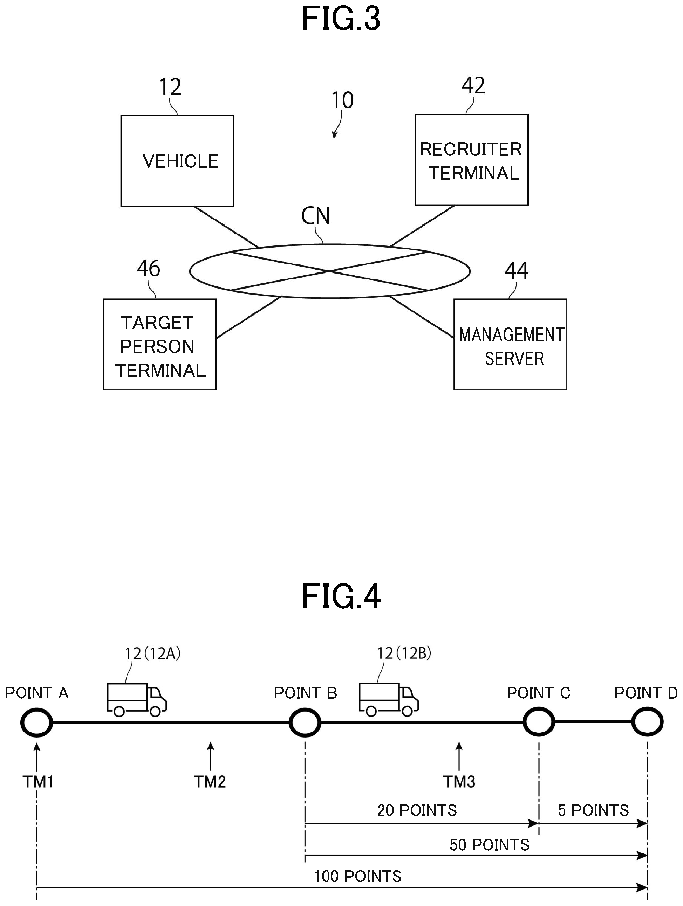

Among the elements illustrated in FIG. 1, the elements other than the vehicle 12 are elements (functional components) corresponding to various functions performed by a computer device. The computer device includes, for example, a recruiter terminal 42, a management server 44, a target person terminal 46, and the like as illustrated in FIG. 3. Each of the recruiter terminal 42, the management server 44, the target person terminal 46, and the like may be configured by combining a plurality of computer devices.

The vehicle 12 also includes a computer device and is controlled by the computer device. Therefore, the vehicle 12 may be illustrated similarly to the recruiter terminal 42, the management server 44, the target person terminal 46, and the like as illustrated in FIG. 3.

Each of the computer devices of the vehicle 12, the recruiter terminal 42, the management server 44, and the target person terminal 46 includes a central processing portion such as a central processing unit (CPU), a storage portion serving as storage media, a communicating portion that enables communication with the outside, and the like, which are not illustrated. Among the above components, the central processing portion performs various operations according to a control program under management of an operating system (OS). The central processing portion may include a plurality of cores (CPU cores). Hereinafter, the control program may be referred to as an "application" (meaning an application program).

The storage portion is implemented by, for example, one or a combination of various storage media such as a register, a memory, and a storage (a hard disk, a solid state drive (SSD), or the like). The storage portion includes a read only memory (ROM) that stores the OS, various control programs, various setting information, and other information, and a random access memory (RAM) serving as a temporary storage area.

As illustrated in FIG. 3, the vehicle 12, the recruiter terminal 42, the management server 44, the target person terminal 46, and the like communicate with each other via a communication network CN. The communication network CN may be implemented by wired communication, wireless communication, or a combination thereof. The communication network CN may include various types of communication networks such as a local area network (LAN), a wide area network (WAN), and a virtual private network (VPN). Furthermore, the communication network CN includes an Internet network. Furthermore, the communication network CN may include a cloud that provides services via the Internet network. Note that details of functions performed by the vehicle 12, the recruiter terminal 42, the management server 44, the target person terminal 46, and the like connected via the communication network CN are described below.

<Types of Available Vehicles> The vehicle 12 is a transport vehicle capable of transporting passengers (humans) and cargo (a package, an item, or an object) in a mixed manner (cargo-passenger mixed manner). The vehicle 12 may be a vehicle powered by electricity or an internal combustion engine, for example. The vehicle powered by electricity includes a battery electric vehicle (BEV), a hybrid electric vehicle (HEV), a plug-in hybrid electric vehicle (PHEV), and a fuel cell vehicle (FCEV). The vehicle powered by the internal combustion engine includes a gasoline-fueled vehicle, a diesel-fueled vehicle, and an alternative-fueled vehicle.

In the present embodiment, any type of vehicle can be applied depending on the situation. However, as a vehicle used for transport on a "final route" described below, for example, a vehicle that can be used for the "green slow mobility", such as an electric cart, is considered to be suitable. The "green slow mobility" can be defined as a generic term including, for example, a small moving service utilizing an electric vehicle capable of traveling on a public road at a speed of lower than about 20 km/h, a vehicle used for the small moving service, and the like.

There are various types of vehicles that can be used for the "green slow mobility". Such vehicles include, for example, light automobiles, compact automobiles, and ordinary automobiles. In addition, the vehicle 12 may also be classified into a cart and a bus. The cart includes a single-person cart and a multi-person cart (for two to seven persons), and the like. In addition, the cart includes a golf cart and an agricultural cart. Furthermore, the electric cart is also used, for example, for an elderly person to drive and move, or for guiding a tourist while providing tourist guidance at tourist spots.

<Specific Example of Cargo-Passenger Transport Service> FIG. 4 illustrates a specific example of the cargo and passenger transport service. In FIG. 4, as illustrated from left to right in the drawing, the vehicle 12 travels from a point A, through a point B and a point C, to a point D. The point A indicates a departure point of the vehicle 12. The point D indicates a transport destination (end point) of cargo and passengers. In this case, the transport route of the vehicle 12 includes a route from the point A to the point D, a route from the point A to the point C, a route from the point A to the point B, a route from the point B to the point D, a route from the point B to the point C, and a route from the point C to the point D. The route including the point D is referred to as the "final route".

Here, as an example of the cargo and passenger transport service, a home delivery service can be given. The home delivery service has various aspects. In the home delivery service, for example, a requester for delivery (delivery requester) requests a delivery company to deliver a package, and then the delivery company sends the package to a designated delivery destination. Furthermore, as another example, in the case of a home delivery service associated with electronic commerce, a product provided in an electronic commerce market by a seller of the product (product seller) is purchased by a purchaser of the product (product purchaser), and then an operator of the electronic commerce service requests a delivery company to deliver the product to a delivery destination designated by the product purchaser. Here, the "delivery" is a part of the "transport". The "delivery" is an aspect of the "transport". Although the description has been given by taking the "delivery" as an example herein, for example, it is also possible for package collection to determine an executor and provide the cargo and passenger transport service similarly to the delivery.

When such a home delivery service is applied to the example of FIG. 4, the point A corresponds to, for example, a package reception point of the delivery company, a delivery office of the delivery company, a logistics base, and the like. The logistics base includes a warehouse, a delivery center, a logistics center, a manufacturing factory, and other places. The point D corresponds to the designated delivery destination. For example, the point D corresponds to various points such as a general household, a company, a store, a supermarket, a convenience store, a school, a local government, a community center, a hospital, and other places.

The point B and the point C correspond to points on the way from the point A to the point D. The point B or the point C corresponds to, for example, an entrance or an exit of a national expressway (hereinafter, referred to as an "expressway"), a boundary point between a general national road (hereinafter, referred to as a "national road"), a prefectural road (hereinafter, referred to as a "prefectural road"), and a local road, and a boundary point between a prefectural road and a local road, and the like. In addition, the point B or the point C may be a point in the middle of an expressway, a national road, a prefectural road, or a local road. In the present embodiment, the expressway, the national road, and the prefectural road may be referred to as "trunk roads", and other roads (the local road and the like) may be referred to as "non-trunk roads". In addition, the delivery route (transport route) up to a stage preceding the "final route" can be referred to as a "main route".

The delivery route as illustrated in FIG. 4 is determined by the transport route determining portion 22 illustrated in FIG. 1. The function of the transport route determining portion 22 may be implemented in the recruiter terminal 42 or the management server 44. In addition, the function of the transport route determining portion 22 may be implemented in both the recruiter terminal 42 and the management server 44.

The transport route determining portion 22 determines the delivery route from the point A to the point D (S11 in FIG. 2) when a starting point (the point A in this embodiment) and an ending point (the point D in this embodiment) are input. Here, the transport route determining portion 22 determines, as an initial delivery route (initial route), the delivery route from the point A to the point D via the point B and the point C.

Map information may be used to determine the delivery route (transport route). Data of the map information may be stored in a storage such as a hard disk, an SSD, or the like connected to the management server 44, or may be sequentially provided from a map server (not illustrated) to the recruiter terminal 42, the management server 44, or the like via the communication network CN. Note that the determination of the delivery route by the transport route determining portion 22 includes a change of the delivery route and the like. The change of the delivery route is described below.

For the delivery route determined by the transport route determining portion 22, for example, a situation is assumed in which the delivery company cannot perform delivery for the entire or a part of the delivery route due to circumstances such as a shortage of manpower and the like. Among such situations, a situation in which the delivery company cannot perform delivery for a part of the delivery route includes a situation in which the delivery company can perform delivery from the point A to the point B (or the point C), but the delivery company cannot perform delivery from the point B to the point D (or from the point C to the point D).

In such situations, a request (commission) is made to a third party to perform delivery on behalf of the delivery company for the delivery route for which the delivery company cannot perform delivery. For example, a request for delivery for the entire route from the point A to the point D may be made to one third party. In some cases, the delivery company may perform delivery from the point A to the point B (or the point C), and a request for delivery for the remaining delivery route may be made to one third party.

Furthermore, the delivery for the remaining delivery route may be divided into, for example, delivery from the point B to the point C and delivery from the point C to the point D, and requests for such delivery may be made to respective different third parties. In a case where the requests for delivery are made to a plurality of third parties, delivery is transferred (relayed) between different third parties. Note that a third party who applies for a request, is requested for delivery through various types of information process (described below), and performs delivery is referred to as the "executor", hereinafter.

The third party subject to the request includes, for example, a resident in a region including the delivery route, a resident in a region including the delivery destination, a pre-registered registrant, and the like. Hereinafter, the region including the delivery route may be referred to as a "delivery-route-including region", and the resident in the region including the delivery route may be referred to as a "resident in the delivery-route-including region". In addition, the region including the delivery destination (here, the point D) may be referred to as a "delivery-destination-including region", and the resident in the delivery-destination-including region may be referred to as a "resident in the delivery-destination-including region".

In addition, the registrant may be included among the residents in the delivery-route-including region or the residents in the delivery-destination-including region. Furthermore, the registrant may be a third party other than those in the delivery-route-including region and the delivery-destination-including region. Information regarding the residents in the delivery-route-including region, the residents in the delivery-destination-including region, and the registrant is stored in a database. The information in the database is read by the management server 44 or the like. The database can be managed using, for example, the management server 44 or the like.

The vehicle 12 used in the cargo and passenger transport service may be a vehicle owned by a person who performs delivery. The vehicle 12 includes, for example, a vehicle owned by the delivery company and driven by an employee or the like of the delivery company, a vehicle of the third party (executor) that performs delivery instead of the delivery company, and the like.

When the cargo-passenger mixed transport service is performed, a passenger and a package are loaded on the vehicle 12. The delivery company may operate and manage the cargo-passenger mixed transport service to provide the service. Alternatively, for example, a taxi company or a similar company may operate and manage the cargo-passenger mixed transport service to provide the service. In addition, a specific company, a local government, or the like may directly operate and manage the cargo-passenger mixed transport service and operate the vehicle 12 to provide the service. Alternatively, a specific company, a local government, or the like may outsource the cargo-passenger mixed transport service to a delivery company, a taxi company, or the like to provide the service.

<Transmission of Upstream Data> Upon the request for delivery, the upstream data is transmitted from the upstream data transmitting portion 16 (FIG. 1) (S14 in FIG. 2). The upstream data is transmitted to a transmission target person (which may be simply referred to as a "target person" hereinafter). The transmission target person includes, for example, the resident in the delivery-route-including region, the resident in the delivery-destination-including region, the registrant, and the like.

The transmission of the upstream data by the upstream data transmitting portion 16 is performed, for example, by a person associated with a party that requests delivery (such as the delivery company, a taxi company, or a local government) (the person is hereinafter referred to as a recruiter) operating the recruiter terminal 42 (FIG. 3) via the communication network CN. In this case, the function of the upstream data transmitting portion 16 may be implemented in the recruiter terminal 42. In addition, the function of the upstream data transmitting portion 16 may be implemented in both the recruiter terminal 42 and the management server 44. In this case, for example, the recruiter terminal 42 may transmit the upstream data to the management server 44, and the management server 44 may transfer (or transmit after processing into a predetermined information form) the upstream data to a wider area.

In a case where the recruiter is an employee of the delivery company, the recruiter terminal 42 includes a computer device (computer terminal device) operated by the employee of the delivery company, a person related to the delivery company, or the like. In addition, the recruiter terminal 42 is not limited to a terminal used in an office of the delivery company, and may be, for example, a terminal mounted on the vehicle 12.

The upstream data is data related to a request for execution of the delivery service and includes information indicating that the executor is being recruited (recruitment information), information indicating the incentive related to the delivery service (incentive information), and the like as illustrated in FIG. 5. Details of the incentive are described below. The recruitment information may include information regarding a date for requesting delivery (delivery request date information), information regarding an arrival time of a package to be delivered or a passenger to be transported at each of the points (such as the points A to D) (package and other items arrival time information), information regarding a scheduled delivery time slot (delivery time slot information), information regarding the delivery destination (delivery destination information such as an address and a recipient name), information regarding the package and other items (package and other items information such as the size, number, packaging type, content type of the package, the number of passengers, a passenger attribute (distinction between adults and children, the presence or absence of elderly people, and the like)), information regarding the delivery route (delivery route information), and the like.

The upstream data is transmitted in a transmission range determined by the transmission range determining portion 24 (S12 in FIG. 2). The function of the transmission range determining portion 24 may be implemented in, for example, the management server 44. Furthermore, the function of the transmission range determining portion 24 may be implemented in the recruiter terminal 42, or may be implemented in both the recruiter terminal 42 and the management server 44.

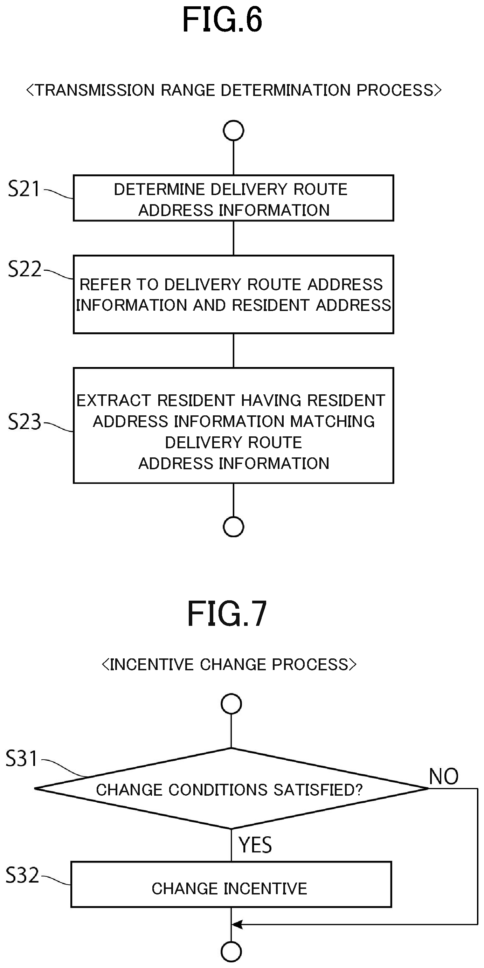

For example, as specifically illustrated in FIG. 6, the transmission range determining portion 24 determines information regarding an address related to the delivery-route-including region (for example, information indicating administrative divisions ranging from prefectures to cities, wards, towns, and villages) (S21). Hereinafter, the information regarding the address related to the delivery-route-including region is referred to as "delivery route address information". The transmission range determining portion 24 refers to the delivery route address information and information indicating an address (resident address) of a resident in a region where the cargo and passenger transport service is provided (hereinafter, referred to as "resident address information") (S22). Then, the management server 44 extracts the resident having the resident address information matching the delivery route address information (S23) and determines the extracted resident as the transmission target person. Note that the delivery route address information also includes address information of the delivery destination (delivery destination address information).

The upstream data transmitting portion 16 transmits the upstream data in a format that can be received by the target person terminal 46 of the transmission target person determined by the transmission range determining portion 24. The target person terminal 46 includes, for example, an information terminal owned by the transmission target person. The information terminal owned by the transmission target person includes a mobile phone (smartphone), a tablet terminal, a wearable terminal, and a personal computer (including a notebook PC) of the transmission target person.

Furthermore, the target person terminal 46 is not limited to an information terminal owned by an individual, and may be, for example, an information terminal shared by a plurality of people in a general home or a company. Moreover, the target person terminal 46 may be, for example, an information terminal used in a public place such as a supermarket, a convenience store, a school, a local government, a community center, a hospital, or the like. The resident address information used for determining the transmission range of the upstream data may include addresses of such public places. In this case, the term "resident" of the resident address information is also used in a broader sense to also include such public places.

Note that, for example, the recruiter may set another person related to the recruiter as the transmission target person. In this case, for example, the recruiter in a certain local government may transmit the upstream data to a person related to the same local government.

The resident address information of the target person terminal 46 may be managed in various forms. For example, an owner of the target person terminal 46 registers in advance address information (which may include information from a house number onward) of the resident and an e-mail address. Various types of registered information are managed using the database. The database is connected to the management server 44. The database and the management server 44 may be managed by a local government or may be managed by a private organization (including an organization entrusted by a local government and a private company).

Furthermore, the resident address information may also be managed in cooperation with operators of various social networking services (SNSs). In this case, the management server 44 transmits the upstream data to an operator of an SNS, and a management server (not illustrated) of the operator of the SNS refers to the information regarding the address included in the upstream data and information regarding an address related to a user of the SNS (SNS user) (for example, information indicating a city, a ward, a town, or a village). Then, the management server (not illustrated) of the operator of the SNS transfers (or transmits after processing into a predetermined information form) the upstream data to an account of the SNS user whose information matches. Note that the SNS user may be not only an individual but also a supermarket, a convenience store, a school, a local government, a community center, a hospital, or the like.

<Determination of Incentive> The incentive is a reward given to the executor and may be a motivation for the executor to substitute for delivery. The incentive includes various points and coupons which are electronically granted, electronic money, and the like. The incentive may be uniformly determined or may be changed according to the situation. In the present embodiment, as described below, a content of the incentive may vary depending on circumstances such as an application status of a target person (transmission target person).

The content of the incentive is determined by the incentive determining portion 14 (FIG. 1) (S13 in FIG. 2). The incentive determining portion 14 is configured using the recruiter terminal 42. For example, the recruiter determines the content of the incentive by operating the recruiter terminal 42, inputting the content of the incentive, and confirming the content. It may be said that such determination of the content of the incentive is determination based on an offer (proposal, presentation, or the like) from an upstream side. Note that the incentive determining portion 14 may perform a function of automatically determining or changing the content of the incentive based on a predetermined condition (incentive determination condition).

The content of the incentive may be determined according to a content of an execution schedule (execution schedule content). As an example in which the content of the incentive is determined in association with the execution schedule content, for example, "100 points" may be associated in a case where the execution schedule content is delivery from the point A to the point D as illustrated in FIG. 4. In this case, 100 points are granted to the executor after the delivery is completed.

Furthermore, "50 points" may be associated in a case where the execution schedule content is delivery from the point B to the point D as illustrated in FIG. 4. Furthermore, "20 points" may be associated in a case where the execution schedule content is delivery from the point B to the point C, and "5 points" may be associated in a case where the execution schedule content is delivery from the point C to the point D. In such cases, after the delivery is completed, 50 points, 20 points, and 5 points are respectively granted to the executor.

Note that the larger the point in the present embodiment, the more advantageous it is for the executor (for example, generally more valuable or desirable). Furthermore, for example, it is also possible to make a request for delivery from the point A to the point B or delivery from the point A to the point C and grant the point or the like to such delivery.

Furthermore, it is also conceivable to give the incentive to a person who does not directly contribute to delivery. In this case, the person who does not directly contribute to delivery includes a person who rides on the vehicle 12 as a watcher for preventing theft of the package, a person who assists in loading a package, and the like. Furthermore, the person who does not directly contribute to delivery may also include a person who stays at a transferring point for the package and other items and performs the above-described work and the like. In addition, the person who performs the above-described work may be regarded as an "assistant" of the executor, and the assistant may be recruited together similarly to the executor. Furthermore, it is also possible to determine an incentive (including a change of the incentive described below) for the assistant in a similar manner to the incentive for the executor. In this case, for example, the incentive determining portion 14 may have a function of determining the incentive for the assistant.

In addition, it is conceivable to secure a source for the incentive and to be able to provide the incentive such as various points, coupons, and electronic money without financial difficulty. The source includes donations, grants from national or local governments, advertising revenue, and the like. In a case where the advertising revenue is used, a device for outputting an advertisement may be installed in the vehicle 12, a public place, or the like. The device for outputting an advertisement includes various displays such as a digital signage and an electric bulletin board, a speaker that outputs sound, and the like. In a case where the device for outputting an advertisement is installed in the vehicle 12, it is possible to provide advertisement information to the passenger to be transported.

<Change of Incentive> The incentive determining portion 14 also has a function of changing the previously determined incentive to a content advantageous to the executor (or a content disadvantageous to the executor). The incentive is changed based on a predetermined incentive change condition. The incentive change condition includes, for example, a change condition related to a date and time, a change condition related to an application timing, a change condition related to urgency, a change condition related to a delivery distance, a change condition related to the presence or absence of application, a change condition related to the degree of contribution to decarbonization, and the like.

Among the conditions, the change condition related to a date and time includes, for example, a condition such as whether or not a scheduled date and time for delivery (scheduled delivery date and time) corresponds to predetermined schedule information. The predetermined schedule information related to the scheduled delivery date and time and the like includes, for example, information regarding a date and time when an event such as a sports event, a concert, a festival, or the like is scheduled, and traffic congestion is thus expected in the region including the delivery route. Furthermore, the schedule information may also include information regarding days corresponding to a summer vacation period, a Christmas period, a year-end period, a New Year's period, a holiday, or the like, and on which the number of applicants for the request is expected to be small.

Here, the "applicant" is a third party who has indicated an intention to accept the request. The applicant operates the target person terminal 46 to include, in the downstream data (described below), information indicating the intention to accept the request, and transmits the downstream data to the management server 44 (or the recruiter terminal 42) or the like.

For example, as illustrated in FIG. 7, when the incentive determining portion 14 determines that such incentive change conditions are satisfied (S31: YES), the incentive determining portion 14 multiplies the value of the incentive in a case where the conditions are not satisfied by a predetermined multiplier (for example, 1.5 times) to change the value of the incentive (S32). Such a change of the incentive based on the change condition related to a date and time is performed at a timing before the delivery is started at the point A (a timing TM1 illustrated in FIG. 4).

Furthermore, as an example of the change condition related to an application timing, the incentive determining portion 14 determines the application timing of the applicant based on information regarding an application date and time, and changes the incentive such that the value of the incentive becomes larger for a person who applies earlier (a change from 100 points to 150 points, for example). Then, the incentive determining portion 14 changes the incentive such that the value of the incentive becomes smaller for a person who applies later (a change from 100 points to 60 points, for example).

Such an incentive change based on the change condition related to an application timing may be performed before delivery is started at the point A, for example, as indicated by the timing TM1 in FIG. 4. Furthermore, when delivery from the point B (or the point C) to the point D is requested, the incentive may be changed before arrival at the point B (or the point C) after the delivery from the point A is started, as indicated by a timing TM2 (or a timing TM3) in FIG. 4.

Furthermore, as an example of the change condition related to urgency, when the urgency of the delivery is high, the incentive determining portion 14 changes the incentive such that the value of the incentive increases as compared with a normal case (a change from 100 points to 150 points, for example). Information as to whether or not a request at a corresponding time point satisfies the change condition related to urgency may be input by the recruiter operating the recruiter terminal 42, for example.

Such a change of the incentive based on the change condition related to urgency may be performed, for example, at a timing before delivery is started at the point A (the timing TM1 in FIG. 4), similarly to the case of the change of the incentive based on an application timing described above. Furthermore, when delivery from the point B (or the point C) to the point D is requested, the incentive may be changed at the timing TM2 (or TM3) before arrival at the point B (or the point C) after the delivery from the point A is started.

Furthermore, as an example of the change condition related to a delivery distance, the incentive determining portion 14 changes the incentive according to the delivery distance. For example, when a relationship between a delivery distance serving as a reference (reference delivery distance) and the point is predetermined, for example, such that 1 point is assigned for 1 km, and the delivery route (for example, from the point B to the point C) as a request target is 20 km, the incentive is determined to be 20 points. In addition, when the delivery route (for example, from the point B to the point C) as a request target is 10 km, the incentive is determined to be 10 points.

Such a change of the incentive based on the change condition related to a delivery distance may be performed, for example, at the timing TM1 before the delivery is started at the point A. Furthermore, when delivery from the point B (or the point C) to the point D is requested, the incentive may be changed at the timing TM2 (or TM3) before arrival at the point C (or the point D) after the delivery from the point B (or the point C) is started. In addition, the incentive may be changed when arriving at a target arrival point (any one of the points B to D).

Furthermore, as an example of the condition regarding the presence or absence of application, the incentive determining portion 14 changes the incentive when there is no application by a predetermined timing. The absence of application is determined when no downstream data described below is received (S15: NO in FIG. 2). For example, when no application is received by a predetermined timing before the departure of the vehicle 12 at the point A, the incentive determining portion 14 changes the incentive related to each of the delivery routes to 1.5 times the previous incentives (for example, 100 points, 50 points, 20 points, and 5 points).

Furthermore, for example, it may also be assumed that the delivery company performs delivery for the delivery route from the point A to the point B, or that there is an applicant and the executor has been determined for the delivery route from the point A to the point B but there is no applicant for the delivery route after the point B (no applicant is detected). In such a case, at the timing TM2 (FIG. 4) after the vehicle 12 departs from the point A and before the vehicle 12 arrives at the point B, the incentive determining portion 14 may change the incentive related to the delivery route after the point B to 1.5 times the previous incentives (for example, 50 points, 20 points, and 5 points).

In addition, as an example of the change condition related to the presence or absence of an application, when no application is received by a predetermined timing before the departure of the vehicle 12 at the point A (when no applicant is detected), the request may also be withdrawn, and the recruitment may be cancelled. Furthermore, for example, when the delivery company performs delivery from the point A to the point B (or the point C), the request may also be withdrawn and the recruitment may be cancelled at the timing TM2 (or TM3) after the vehicle 12 departs from the point A and before the vehicle 12 arrives at the point B (or the point C).

Furthermore, when a location where passage of the vehicle 12 is difficult is found based on information as to whether or not any location where the passage of the vehicle 12 is difficult exists in the delivery route, the incentive may also be changed so as to increase the value, or the request may be withdrawn, and the recruitment may be cancelled. A change timing or a cancellation timing in this case may be, for example, a sequential timing at which information indicating whether there is a location where the passage is difficult is acquired in the management server 44 or the recruiter terminal 42.

In addition, as an example of the change condition related to the degree of contribution to decarbonization, for example, when the type of vehicle used by the executor has a relatively high degree of contribution to decarbonization, the incentive is changed so as to increase the value. Specifically, for example, when the delivery is performed from the point B to the point D shown in FIG. 4 and a reference incentive is 50 points, if the type of vehicle to be used is a battery electric vehicle (BEV) or a hybrid electric vehicle (HEV), the incentive may be set to 60 points. In addition, when a plug-in hybrid vehicle (PHEV) that uses an internal combustion engine is used, the incentive may be set to 55 points. When a vehicle (gasoline-fueled automobile or the like) using only an internal combustion engine is used, the incentive may be set to 50 points. In this way, it is possible to promote the use of low-carbon vehicles by preferentially treating low-carbon vehicles. Information regarding the type of vehicle to be used may be included in the downstream data, which is described below, and transmitted.

Note that, when there is no applicant (no applicant is detected) even if the incentive is changed, the incentive may be further sequentially changed to one more advantageous for the executor. In this case, the change of the incentive may be repeated until an applicant appears (an applicant is detected) and the executor is determined. In addition, an upper limit of the incentive may be determined in advance, and the recruitment may be stopped when the executor cannot be determined even when the upper limit is reached.

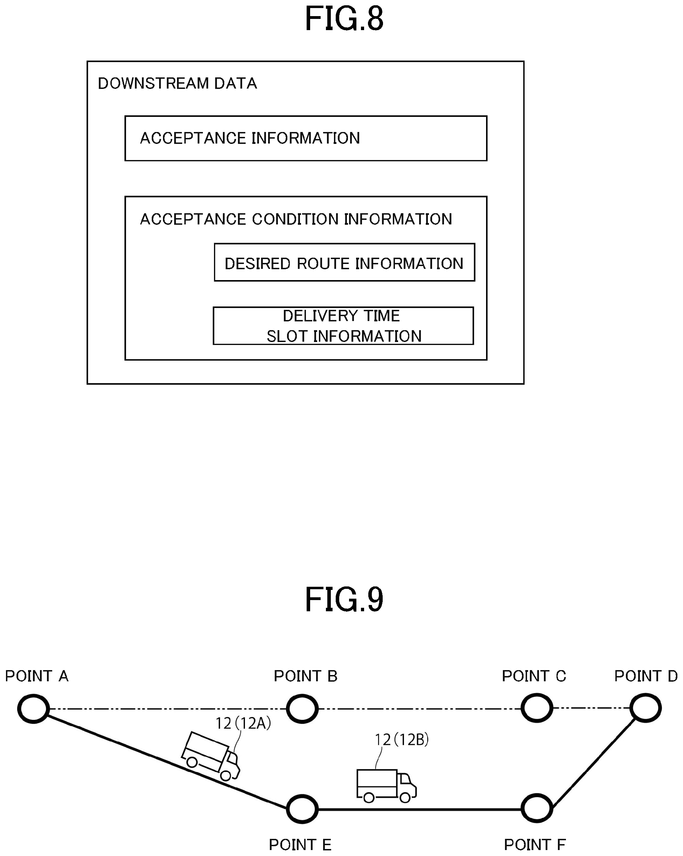

<Transmission and Reception of Downstream Data> When an applicant appears for the request based on the upstream data, the downstream data is transmitted from the target person terminal 46 of the applicant toward the communication network CN as described above. For example, as illustrated in FIG. 8, the downstream data includes information indicating that the applicant has an intention to accept the request (acceptance information), information indicating a condition of the acceptance (acceptance condition information), and the like. The acceptance condition information includes, for example, information (desired route information) indicating for which range (entire or partial range) of the requested delivery route the applicant desires to perform delivery.

The downstream data receiving portion 18 receives the downstream data (S15 in FIG. 2). The function of the downstream data receiving portion 18 may be implemented in the management server 44. In addition, the function of the downstream data receiving portion 18 may be implemented in the recruiter terminal 42, or may be implemented in both the recruiter terminal 42 and the management server 44. As described above, when there is no application (S15: NO), the incentive is determined after changing the content (S13).

<Change of Transport (Delivery) Route> When there is no applicant for the request (no applicant is detected), the transport route (here, the delivery route) may be changed. In this case, although not illustrated, for example, information process when no downstream data is received in S15 of FIG. 2 (S15: NO) is returned from S15 to S11. Then, for example, the transport route determining portion 22 changes the point B and/or the point C to the point E and/or the point F different from the point B and the point C as illustrated in FIG. 9.

As a result, the transmission range of the upstream data is changed, and the upstream data is transmitted to a third party that has not been the transmission target of the upstream data. Such a change of the transport route (delivery route) may be repeated until an applicant is detected. Furthermore, when there was no applicant for the request, and no applicant appears even after the incentive is changed in S13 described above, the content of the incentive may also be restored (restored to the default). Then, the information process may be shifted to S11, and the delivery route may be changed. Note that the delivery route after the change may be referred to as, for example, a "changed delivery route".

<Change of Transmission Range Related to Upstream Data> Furthermore, when there is no applicant for the request, the transmission range related to the upstream data may also be changed without changing the delivery route. In this case, although not illustrated, for example, the information process when no downstream data is received in S15 of FIG. 2 (S15: NO) is returned from S15 to S12. Then, the transmission range determining portion 24 expands the transmission range of the upstream data to a wider range than the previous transmission range or sets the transmission range to a region adjacent to the previous transmission range.

Furthermore, when there was no applicant for the request, and no applicant appears even after the incentive is changed in S13 described above, the content of the incentive may also be restored (restored to the default). Then, the information process may be shifted to S12, and the transmission range may be changed.

<Determination of Executor> The executor determining portion 20 determines the executor based on the downstream data (S17 in FIG. 2). The function of the executor determining portion 20 may be implemented in the management server 44. In addition, the function of the executor determining portion 20 may be implemented in the recruiter terminal 42 or may be implemented in both the recruiter terminal 42 and the management server 44.

The executor determining portion 20 determines the executor from the applicants based on a predetermined executor selection condition. The executor selection condition includes a priority determined by the priority determining portion 26 described below. An applicant with a high priority is determined as the executor for the corresponding delivery. The priority may be determined using various evaluation items and according to a certain rule. The function of the priority determining portion 26 may be implemented in the management server 44. In addition, the function of the priority determining portion 26 may be implemented in the recruiter terminal 42 or may be implemented in both the recruiter terminal 42 and the management server 44.

The evaluation items include, for example, a deliverable range (distance). In this case, the priority of an applicant who can perform delivery for the entire range of the delivery route (from the point A to the point D) may be set relatively high, and the priority of an applicant who can perform delivery for only a part of the range may be set relatively low.

Furthermore, another evaluation item may include, for example, a distance between an address of the applicant or a position of the vehicle 12 and an address of the delivery destination (here, including information from a house number onward). In this case, a person having resident address information (here, including information from a house number onward) closest to the delivery destination address may be prioritized. In addition, the resident in the delivery-destination-including region may also be prioritized over residents in other regions.

Note that proximity (distance) to the delivery destination address may be quantified using a global navigation satellite system (GNSS) such as a global positioning system (GPS) or the map information as described above. In this case, a terminal (computer device) having a positioning function is mounted on the vehicle 12. Furthermore, the measured distance may be an actual measured distance on a map, which is measured along the delivery route on the map, or may be a linear distance measured by connecting the delivery destination and the target person address with a straight line.

In addition, yet another evaluation item may include, for example, the application timing. In this case, the application timing of the applicant is determined based on information regarding the application date and time, and the priority is set higher for a person who applies earlier.

Furthermore, as another evaluation item, for example, a relationship between a package to be delivered and a recipient may be used. Specifically, when the recipient of the package drives the vehicle 12 and returns home, the priority may be set relatively high. Alternatively, when the recipient (or a roommate of the recipient) of the package is waiting at home, and the package is received when the vehicle arrives, the priority may be set relatively high. In this case, the recipient (or a roommate of the recipient) of the package waiting at home may or may not use the vehicle 12. In addition, a plurality of recipients (or roommates of the recipient) of the package may wait at home.

The priority determining portion 26 determines the priority of the applicant by using one or more of the various evaluation items. Then, the executor determining portion 20 refers to the priority as the executor selection condition, and an applicant with the highest priority (top-ranked) is determined as the executor. For example, the total value of priorities obtained based on a plurality of evaluation items may be calculated, and an applicant having the smallest total value may be set as a (top-ranked) applicant having the highest priority.

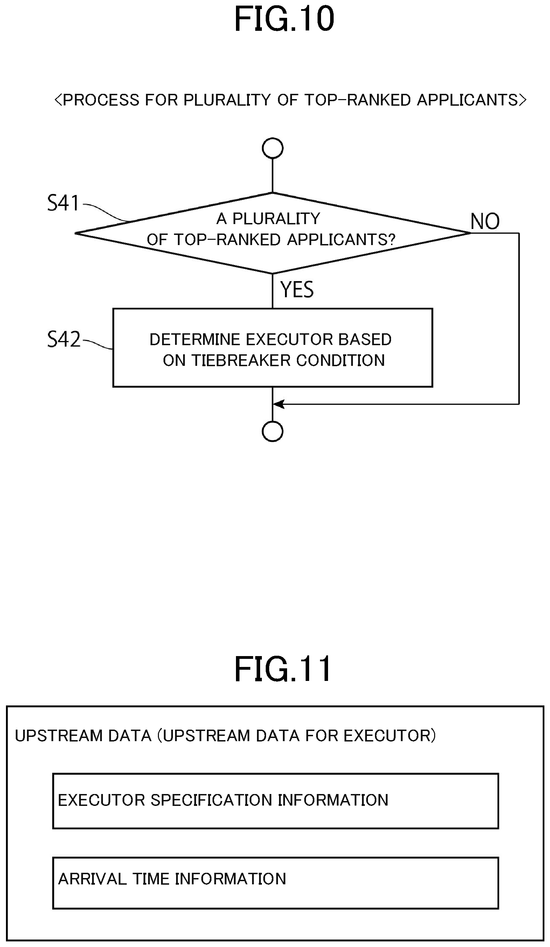

Furthermore, for example, as illustrated in FIG. 10, when there is a plurality of top-ranked applicants (S41: YES), the executor is determined based on a tiebreaker condition (S42). As the tiebreaker condition, for example, various random number lotteries may be adopted. The determination of the executor based on the tiebreaker condition may be performed by the priority determining portion 26 or may be performed by the executor determining portion 20.

Note that, when a plurality of evaluation items is used, priorities for various evaluation items may also be determined, and a top-ranked applicant based on an evaluation item with a high priority may be prioritized.

Furthermore, an executor determination rule in the executor determining portion 20 is not limited to the one based on the priority as described above. For example, a result artificially selected by the recruiter may be input, and the input applicant may be determined as the executor. In addition, the executor determining portion 20 may determine the executor according to an automatic determination logic in which an executor selection condition other than the priority is determined.

<Use of Evaluation Point> Note that, for example, an evaluation point may be adopted as another evaluation item. In this case, information (evaluation information) regarding the evaluation, which is obtained by the executor at the time of the past delivery, is referred to. Then, a priority of an applicant having a high numerical value of the evaluation point included in the evaluation information may be set relatively high.

For example, each time the delivery is performed, the recipient of the package at the delivery destination, a person in charge of the delivery company that requests the delivery, or the like is asked to input the evaluation point for the executor by using an information terminal. The input of the evaluation point may be performed, for example, with reference to a five-grade evaluation sheet. Then, the input evaluation point may be acquired and stored in the management server 44 or the like. When a plurality of evaluation points is acquired, an average value of the plurality of evaluation points may be adopted as the evaluation point for determining the priority.

A criterion for determining the evaluation point is not limited to impressions or subjective information of the recipient of the package at the delivery destination or the person in charge of the delivery company that requests delivery substitution, and other information may be used. As the other information mentioned here, for example, all or some of various types of information may be adopted, such as (a) evaluation information as to whether or not the delivery was performed in a requested time slot, (b) evaluation information as to whether or not a defect (such as crushing or deformation) occurred in an appearance of the package or a content of the package, (c) evaluation information as to whether or not a customer service attitude was favorable, (d) evaluation information as to whether or not there was a complaint (including a complaint from an unspecified person during delivery, or the like), and (e) evaluation information as to whether or not there was a traffic violation or a traffic accident. Furthermore, information such as the deliverable range may be used as the evaluation information. Then, such pieces of evaluation information are acquired as numerical value information indicating the evaluation point and used for evaluation of the executor.

When such pieces of information are adopted for the evaluation of the executor, for example, when the delivery was not performed in the scheduled delivery time slot (the delivery time slot information in FIG. 5), a relatively low evaluation point is given. The evaluation point is assigned such that the larger the difference (difference time) from the scheduled delivery time slot, the lower the evaluation point.

When the executor arrives at a target point, the fact that the executor has arrived at the target point may be transmitted to the communication network CN. In this case, although not illustrated, for example, an application related to the delivery service is installed in an information terminal such as a smartphone owned by the executor. Then, the application is executed to display an operation button (arrival report button), and a tap operation is performed on the displayed operation button. Thereby, the management server 44 and the like may grasp the fact that the executor has arrived at the destination and an arrival time.

In addition, as described above, whether or not the executor has arrived at the destination may be determined by using the GNSS or the map information. When the GNSS or the like is used, although not illustrated, for example, the management server 44 determines whether or not a time (arrival time) at which the vehicle 12 has arrived at the delivery destination on the map information falls within the scheduled delivery time slot (the delivery time slot information in FIG. 5) (relevant to (a) above). Then, when the arrival time falls within the requested time slot, it is determined that the delivery was performed within the requested time slot, and a relatively high evaluation point is granted. Furthermore, when the arrival time does not fall within the requested time slot, it is determined that the delivery was not performed within the requested time slot, and a relatively low evaluation point is granted.

In addition, in relation to (b) to (d) above, for the evaluation information as to whether or not a defect (such as crushing or deformation) occurred in the appearance of the package or the content of the package, the evaluation information as to whether or not the customer service attitude was favorable, the evaluation information as to whether or not there was a complaint (including a complaint from an unspecified person during delivery, or the like), and the like, a person (recipient) who has received the package at the delivery destination (here, the point D) may notify the management server 44 and the like of the evaluation point via the application installed on the information terminal.

Further, in relation to (e) above, the management server 44 or the like may acquire the evaluation information as to whether or not there was a traffic violation or a traffic accident by self-report of the executor. Furthermore, when a system is constructed to enable inquiry or acquisition of violation information and traffic accident information from police-related organizations (such as a prefectural public safety commission) or automobile insurance companies, such pieces of information may also be used as the evaluation information.

<Transmission of Arrival Time Information> The upstream data may be transmitted to the executor after the executor is determined. Then, as described above, the upstream data transmitted for recruitment of the executor may be referred to as, for example, "upstream data for the target person". On the other hand, the upstream data transmitted for information transmission to the executor after the determination of the executor may be referred to as, for example, "upstream data for the executor". In addition, the upstream data for the executor may be transmitted to the executor a plurality of times.

For example, as illustrated in FIG. 11, the upstream data for the executor includes information (executor specification information) for specifying the executor of the delivery related to the final route, and is received by the target person terminal 46 held by the executor. In addition, the upstream data for the executor may include arrival time information that enables delivery of the package to the executor. The arrival time information is generated using the functions of the vehicle position specifying portion 28 and the arrival time calculating portion 30 illustrated in FIG. 1. The functions of the vehicle position specifying portion 28 and the arrival time calculating portion 30 may be implemented in the management server 44, for example. In addition, the functions of the vehicle position specifying portion 28 and the arrival time calculating portion 30 may be implemented in the recruiter terminal 42 or may be implemented in both the recruiter terminal 42 and the management server 44. For example, the function of the vehicle position specifying portion 28 may be implemented in the management server 44, and the function of the arrival time calculating portion 30 may be implemented in the recruiter terminal 42.

The vehicle position specifying portion 28 may specify the current position of the vehicle 12. For example, the GNSS or the map information as described above may be used to specify the current position of the vehicle 12. The arrival time calculating portion 30 calculates the arrival time based on a distance from the current position of the vehicle 12 to the target arrival point (the actual measured distance on the map on the determined delivery route), and an average speed or theoretical speed of the vehicle 12 (information regarding a speed limit of each road or the like).

For example, when the delivery company performs delivery from the point A to the point B (or the point C) using an own vehicle of the delivery company, and the executor performs delivery from the point B (or the point C) to the point D using an own vehicle of the executor, the delivery route from the point B (or the point C) to the point D is the final route including the point D. In this case, the vehicle of the delivery company is the transferring vehicle 12A (FIG. 4), and the vehicle of the executor is the receiving vehicle 12B (FIG. 4).

The arrival time calculating portion 30 calculates a time (arrival time and estimated arrival time) at which the transferring vehicle 12A of the delivery company arrives at the starting point of the final route (here, the point B (or the point C)). Then, the upstream data transmitting portion 16 includes, in the upstream data (the upstream data for the executor), information (arrival time information) indicating the arrival time and transmits the upstream data to the communication network CN. Note that, when the delivery route from the point A to the point D is the final route, transmission of the arrival time may be omitted.

<Advantages of Vehicle System 10> (1) In the vehicle system 10 of the present embodiment as described above, the upstream data (the upstream data for the target person or the like) including the incentive information is transmitted by the upstream data transmitting portion 16, and execution of the cargo and passenger transport service (for example, a delivery service) is requested by transmission of the upstream data. Further, the downstream data receiving portion 18 receives the downstream data from the applicants who have applied for the execution of the cargo and passenger transport service, and the executor determining portion 20 determines the executor from the applicants based on the predetermined executor selection condition (the priority or the like).

Therefore, it becomes easy to secure a large number of target persons who can become potential executors and to cover a wide region where such target persons reside. Then, for example, the executor of the cargo and passenger transport service can be determined from a wider range of target persons, not limited to a narrow range of target persons such as a passenger of the vehicle as disclosed in Patent Literature 1 described above. Therefore, it becomes easier to determine (find) the executor, and it is possible to solve the shortage of manpower related to work of driving of the vehicle 12.

In addition, human resources in a region where the target person resides can be effectively utilized for transport work (delivery work and the like), and the cargo and passenger transport service can be performed by mobilizing all the residents in the region. Then, for example, as compared with the completely unmanned operation of the vehicle, the region can be revitalized and social implementation can be promoted at an early stage. When the region is a depopulated region, the cargo and passenger transport service leads to the revitalization of the region. As a result, more social issues can be solved.

(2) According to (1) above, the vehicle system 10 includes the transport route determining portion 22 that is configured to determine the transport route (for example, the delivery route) of the vehicle 12. The upstream data is data that is used for requesting execution of the cargo and passenger transport service for the final route (such as the delivery route including the point D as the delivery destination) from a midpoint of the transport route (the point B, the point C, or the like) to the transport destination (such as the delivery destination).

Therefore, it is easy to encourage the target person in the vicinity of the final route to make an application or participate, and a probability that the resident of the region in the vicinity of the final route is determined as the executor can be increased. As a result, a region in the vicinity of the final route can be revitalized. Furthermore, when the region in the vicinity of the final route is a depopulated region, the cargo and passenger transport service leads to the revitalization of the region, and social issues such as depopulation of the region can be solved.

(3) According to (1) or (2) above, the vehicle system 10 includes the transmission range determining portion 24 that is configured to determine the transmission range of the upstream data. The upstream data transmitting portion 16 determines, as the transmission range, a predetermined region including the transport destination (the delivery-destination-including region or the like) based on the address information (the delivery destination address information or the like) of the transport destination (delivery destination or the like).

Therefore, it is easy to encourage the target person in the vicinity of the delivery destination to make an application or participate, and a probability that the resident of the delivery-destination-including region is determined as the executor can be increased. As a result, the delivery-destination-including region can be revitalized. Furthermore, when the delivery-destination-including region is a depopulated region, the cargo and passenger transport service leads to the revitalization of the region, and social issues such as depopulation of the region can be solved.
(4) According to (1) or (2) above, in the vehicle system 10, the upstream data transmitting portion 16 transmits the upstream data to the registrant registered in advance. Therefore, the upstream data can be accurately transmitted to the target person who has a clear intention of application. Therefore, it is possible to prevent a target person who does not have a clear intention from being determined as the executor, resulting in the provision of a low-quality cargo and passenger transport service.
(5) According to (1) or (2) above, the vehicle system 10 includes the priority determining portion 26 that is configured to determine the priority of the applicant. The executor determining portion 20 determines the executor based on the priority. Therefore, the executor selection condition can be appropriately determined. Then, an applicant with a high priority can be determined as the executor for the corresponding delivery. Furthermore, the executor can be determined according to a certain rule, so that the cargo and passenger transport service can be appropriately operated.
(6) According to (5) above, in the vehicle system 10, the priority determining portion 26 prioritizes a resident (a resident in the delivery-destination-including region) in a region including the transport destination (the delivery-destination-including region or the like). Therefore, similarly to (3) above, it is easy to encourage the target person in the vicinity of the delivery destination to make an application or participate, and a probability that the resident of the delivery-destination-including region is determined as the executor can be increased. As a result, the delivery-destination-including region can be revitalized. Furthermore, when the delivery-destination-including region is a depopulated region, the cargo and passenger transport service leads to the revitalization of the region, and social issues such as depopulation of the region can be solved.
(7) According to (2) above, the vehicle system 10 includes the vehicle position specifying portion 28 that is configured to specify the current position of the vehicle 12 (the transferring vehicle 12A or the like) and the arrival time calculating portion 30 that is configured to calculate the arrival time at the starting point of the final route. The upstream data transmitting portion 16 transmits the upstream data (the upstream data for the executor, or the like) with the arrival time information indicating the arrival time. Therefore, the executor who takes over the transport (delivery) can be notified of the arrival time of the cargo and passengers. Then, it is possible to prevent the executor who takes over the transport (delivery) from arriving at the transferring point late or arriving excessively early and wasting time. As a result, the transfer or takeover of the transport (delivery) can be smoothly performed.
(8) According to (1) or (2) above, in the vehicle system 10, when no applicant who satisfies the executor selection condition is detected, the incentive determining portion 14 changes the content of the incentive, and the upstream data transmitting portion 16 transmits the upstream data (the upstream data for the target person or the like) including the changed incentive information. Therefore, the target person can be encouraged to make an application, so that the executor can be more reliably determined.
(9) According to (1) or (2) above, in the vehicle system 10, the incentive determining portion 14 changes the content of the incentive based on the schedule information indicating a predetermined schedule related to an operation date of the vehicle 12 (information related to an event in a region including the delivery route, or the like). Therefore, the target person can also be encouraged to make an application, so that the executor can be more reliably determined. Furthermore, a situation in which the executor is not determined due to a shortage of manpower can be prevented.
(10) According to (1) or (2) above, in the vehicle system 10, when no applicant who satisfies the executor selection condition is detected, the transport route determining portion 22 changes the transport route. Therefore, the target person can also be encouraged to make an application, so that the executor can be more reliably determined.

<Further Advantages> By using the vehicle 12 used for the transport on the final route as a vehicle for the green slow mobility, low-carbon mobility in the delivery-destination-including region can be promoted. In addition, since a vehicle for the green slow mobility generally travels at a speed of lower than about 20 km/h, the cargo and passenger transport service can be provided while reducing a risk of a traffic accident in the delivery-destination-including region. In addition, the vehicle for the green slow mobility is usually designed to be easy to drive even for elderly people, so that the elderly people in the delivery-destination-including region can be actively engaged and the region can be revitalized. Then, with the vehicle system 10, various social issues such as promotion of low-carbon mobility, prevention of traffic accidents, active engagement of elderly people, and revitalization of the region can be solved (or improved) in parallel in the delivery-destination-including region. As a result, more social issues can be solved.

<Others> Note that the present invention is not limited to the various embodiments, and various modifications and combinations of various embodiments may be made without departing from the scope of the invention.

### Reference Signs

10: Vehicle system
12: Vehicle
12A: Transferring vehicle
12B: Receiving vehicle
14: Incentive determining portion
16: Upstream data transmitting portion
18: Downstream data receiving portion
20: Executor determining portion
22: Transport route determining portion
24: Transmission range determining portion
26: Priority determining portion
28: Vehicle position specifying portion
30: Arrival time calculating portion
42: Recruiter terminal
44: Management server
46: Target person terminal
CN: Communication network

## Claims

1. A vehicle system comprising:
at least one vehicle that is used for a cargo and passenger transport service;
an incentive determining portion that is configured to determine an incentive related to the cargo and passenger transport service;
an upstream data transmitting portion that is configured to transmit upstream data that comprises incentive information indicating the incentive, the upstream data being data that is used for requesting execution of the cargo and passenger transport service;
a downstream data receiving portion that is configured to receive downstream data from applicants who have applied for the execution of the cargo and passenger transport service based on the upstream data; and
an executor determining portion that is configured to determine an executor from the applicants based on a predetermined executor selection condition.

2. The vehicle system according to claim 1, comprising a transport route determining portion that is configured to determine a transport route of the vehicle,
wherein the upstream data is data that is used for requesting the execution of the cargo and passenger transport service for a final route from a midpoint of the transport route to a transport destination.

3. The vehicle system according to claim 2, comprising a transmission range determining portion that is configured to determine a transmission range of the upstream data,
wherein the upstream data transmitting portion is configured to determine, as the transmission range, a predetermined region that comprises the transport destination based on address information of the transport destination.

4. The vehicle system according to claim 1 or 2, wherein the upstream data transmitting portion is configured to transmit the upstream data to a registrant registered in advance.

5. The vehicle system according to claim 2, comprising a priority determining portion that is configured to determine a priority of the applicants,
wherein the executor determining portion is configured to determine the executor based on the priority.

6. The vehicle system according to claim 5, wherein the priority determining portion is configured to prioritize a resident in a region that comprises the transport destination.

7. The vehicle system according to claim 2, comprising:
a vehicle position specifying portion that is configured to specify a current position of the vehicle; and
an arrival time calculating portion that is configured to calculate an arrival time at a starting point of the final route,
wherein the upstream data transmitting portion is configured to transmit the upstream data with arrival time information indicating the arrival time.

8. The vehicle system according to claim 1 or 2, wherein
the incentive determining portion is configured to change a content of the incentive when an applicant who satisfies the executor selection condition is not detected, and
the upstream data transmitting portion is configured to transmit the upstream data with the changed incentive information.

9. The vehicle system according to claim 1 or 2, wherein the incentive determining portion is configured to change a content of the incentive based on schedule information indicating a predetermined schedule related to an operation date of the vehicle.

10. The vehicle system according to claim 2, wherein the transport route determining portion is configured to change the transport route when an applicant who satisfies the executor selection condition is not detected.
